Europäisches Patentamt

European Patent Office

Office européen des brevets

(11) Veröffentlichungsnummer: **0 363 356 B1**

# (12) EUROPÄISCHE PATENTSCHRIFT

(45) Veröffentlichungstag der Patentschrift:
02.05.91 Patentblatt 91/18

(51) Int. Cl.⁵: **B60R 16/02, H02J 7/14**

(21) Anmeldenummer: **88901230.8**

(22) Anmeldetag: **02.02.88**

(86) Internationale Anmeldenummer:
**PCT/DE88/00048**

(87) Internationale Veröffentlichungsnummer:
**WO 88/08380 03.11.88 Gazette 88/24**

(54) **SPANNUNGSVERSORGUNG FÜR ELEKTRONISCHE GERÄTE, INSBESONDERE FÜR SICHERHEITSRELEVANTE GERÄTE IN KRAFTFAHRZEUGEN.**

(30) Priorität : 29.04.87 DE 3714193

(43) Veröffentlichungstag der Anmeldung :
18.04.90 Patentblatt 90/16

(45) Bekanntmachung des Hinweises auf die
Patenterteilung :
02.05.91 Patentblatt 91/18

(84) Benannte Vertragsstaaten :
DE FR SE

(56) Entgegenhaltungen :
EP-A- 0 129 221
DE-A- 3 007 941

(56) Entgegenhaltungen :
DE-C- 196 675
US-A- 3 374 779
US-A- 4 127 782
US-A- 4 207 511
Patent Abstracts of Japan, Vol. 7, No. 32
(P-174)(1177), 8 February 1983, & JP - A -
57185501 (Nissan Jidosha K.K.) 15th November 1982

(73) Patentinhaber : ROBERT BOSCH GMBH
Postfach 50
W-7000 Stuttgart 1 (DE)

(72) Erfinder : FREY, Wunibald
Schillerstrasse 8
W-7141 Schwieberdingen (DE)

## Beschreibung

### Stand der Technik

Die Erfindung geht aus von einer Spannungsversorgung nach der Gattung des Hauptanspruchs.

Die Spannungsversorgung elektronischer Geräte, insbesondere von sicherheitsrelevanten Geräten in Kraftrfahrzeugen kann durch äußere, beispielsweise mechanische Einflüsse, aber auch durch Ausfall einzelner Bauteile gestört oder unterbrochen werden. Dies kann beispielsweise bei Kraftfahrzeugen zu einem gravierenden Sicherheitsverlust führen, wenn sicherheitsrelevante elektronische Fahrzeugkomponenten wie etwa die elektronische Lenkung, Federung, Reifendruckanpassung oder das elektronische Bremssystem betroffen sind.

Bei herkömmlichen Einrichtungen zur Spannungsversorgung in einem Kraftfahrzeug wie sie beispielsweise aus der US-PS 4 127 782 bekannt sind, sind keine besonderen Maßnahmen zur Sicherstellung der Spannungsversorgung bei sicherheitsrelevanten Geräten vorgesehen.

Bei der aus der US-PS 4 127 782 bekannten Einrichtung zur Spannungsversorgung lädt ein Generator eine Hauptbatterie, die den Starter versorgt und eine Hilfsbatterie, die das Gleichspannungsbordnetz versorgt. Da die Hilfsbatterie relativ weit vom Generator entfernt ist, kann in der Leitung zwischen Generator und Hilfsbatterie ein Spannungsabfall auftreten, es ist deshalb ein Transformator zur Spannungserhöhung vorgesehen, so daß der Spannungsabfall keine negativen Auswirkungen bezüglich der Ladung der Hilfsbatterie hat.

Da jedoch das gesamte Bordnetz von der Hilfsbatterie versorgt wird, werden auch sicherheitsrelevante Baugruppen des Bordnetzes spannungslos, wenn zwischen der Hilfsbatterie und dem Bordnetz eine ungewollte Unterbrechung auftritt.

### Vorteile der Erfindung

Die erfindungsgemäße Spannungsversorgung mit den kennzeichnenden Merkmalen des Hauptanspruchs hat demgegenüber den Vorteil, daß die Betriebssicherheit wesentlich erhöht wird, indem Gruppen von elektronischen Geräten oder jedem einzelnen Gerät eine separate Versorgungsschaltung zugeordnet wird.

Durch die in den Unteransprüchen aufgeführten Maßnahmen sind vorteilhafte Weiterbildungen und Verbesserungen der im Hauptanspruch angegebenen Spannungsversorgung möglich. Besonders vorteilhaft ist es, daß der Ausfall der Versorgungsschaltung eines oder mehrerer elektrischer Geräte durch eine als Speicher dienende Hilfsspannungsquelle überbrückt wird. Die Betriebssicherheit wird noch dadurch gesteigert, daß mittels einer Anzeigeeinrichtung eine Störung bzw. der Ausfall einer Versorgungsschaltuns angezeigt wird.

### Zeichnung

Zwei Ausführungsbeispiele der Erfindung sind in der Zeichnung dargestellt und in der folgenden Beschreibung näher erläutert. Es zeigen :

Figur 1 als erstes Ausführungsbeispiel der Spannungsversorgung ein Prinzipschaltbild eines Bordnetzes für die elektronische Bremskreisversorgung eines Kraftfahrzeugs mit Anhänger und

Figur 2 ein zweites Ausführungsbeispiel der Spannungsversorgung nach Figur 1 mit einer Ausfallanzeige.

### Beschreibung der Ausführungsbeispiele

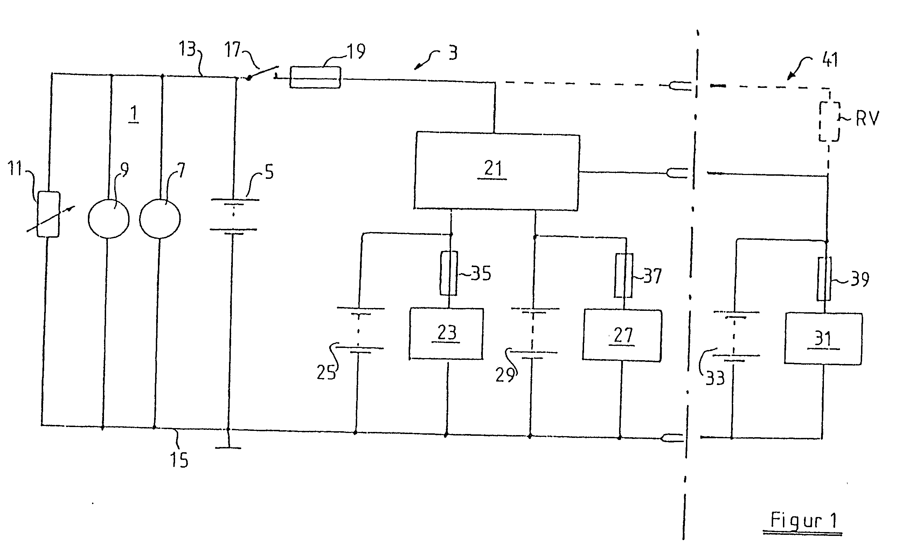

Figur 1 zeigt ein Prinzipschaltbild eines Bordnetzes für die elektronische Bremskreisversorgung eines Kraftfahrzeugs, nämlich eines Lastkraftwagens mit einem Anhänger. Die Trennung zwischen Zugmaschine und Anhänger ist durch eine strichpunktierte Linie angedeutet.

Das Bordnetz 1 der Zugmaschine 3 wird durch eine Batterie 5, einen Generator 7 mit vorzugsweise integriertem Spannungsregler und integriertem Überspannungsschutz (z.B. in Form von Leistungszenerdioden), einen Starter 9 sowie Bordnetzverbraucher 11 angedeutet. Über die Leitungen 13 und 15 werden elektrische Verbraucher der Zugmaschine, von denen hier nur eine elektrische Bremskreisversorgung dargestellt ist, mit Energie versorgt. An der ersten Leitung 13 liegt eine positive Spannung von beispielsweise 24 V und an der zweiten Leitung 15 Masse an. Die erste Leitung 13 wird über einen Fahrschalter 17 und eine Sicherung 19 zu einer als DC/DC-Wandler 21 ausgelegten Versorgungsschaltung geführt. Diese hat drei Ausgänge, an denen beispielsweise 12 bis 14 V liegen und die zu drei elektronischen Geräten mit je einer parallel geschalteten Hilfsspannungsquelle führen, nämlich zu einem ersten Regelelektronikkreis 23 mit einer als Hilfsspannungsquelle dienenden ersten Hilfsbatterie 25, einem zweiten Regelelektronikkreis 27 und einer zweiten Hilfsbatterie 29 und einem dritten Regelelektronikkreis 31 mit einer dritten Hilfsbatterie 33. Die Regelelektronikkreise sind jeweils über in den Zuleitungen liegende Sicherungen 35, 37, 39 abgesichert. Die Sicherungen können dabei als Schmelzsicherungen oder als Überspannung bzw. Überströme verhindernde elektronische Schaltungen ausgelegt sein.

Die Spannungsversorgung des jenseits der strichpunktierten Linie, also auf dem Anhänger 41 angeordneten Regelkreises 31 kann auch über einen Vorwiderstand RV erfolgen. In diesem Fall braucht der DC/DC-Wandler nur zwei Ausgänge aufzuweisen. Die Verbindung zwischen dem Bordnetz und dem dritten Regelelektronikkreis 31 über den Vorwiderstand RV ist gestrichelt dargestellt.

In Figur 1 ist angedeutet, daß die elektronischen Verbindungen zu auf dem Anhänger 41 liegenden Verbrauchern durch Steckverbindungen hergestellt werden.

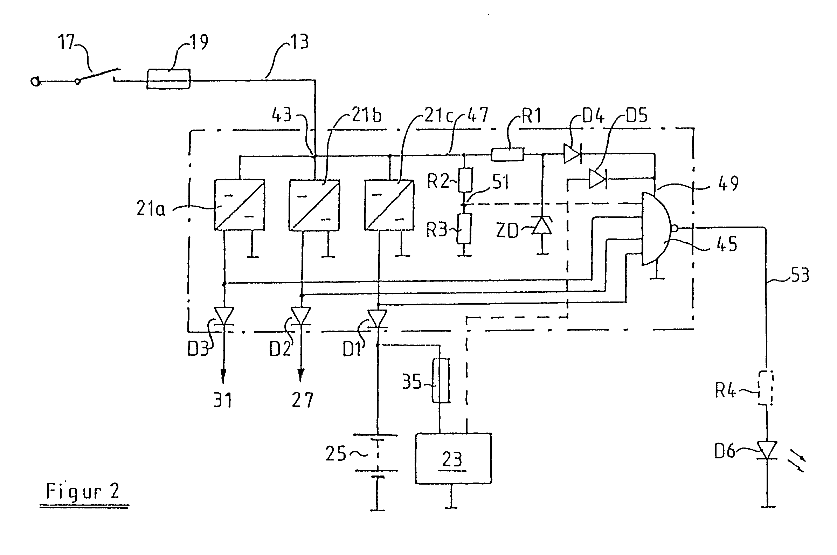

Figur 2 zeigt ein zweites Ausführungsbeispiel der Spannungsversorgung gemäß Figur 1 mit einer Ausfallanzeige. Das Bordnetz ist zur Vereinfachung weggelassen. In den Figuren 1 und 2 übereinstimmende Teile sind mit identischen Bezugszeichen versehen.

Bei diesem Ausführungsbeispiel sind statt eines DC/DC-Wandlers für bis zu drei Regelelektronikkreise je ein DC/DC-Wandler für jeden elektronischen Regelelektronikkreis des Bremssystems vorgesehen.

Den primärseitig parallel geschalteten und untereinander sekundärseitig entkoppelten DC/DC-Wandlern 21a, 21b und 21c wird über die Leitung 13, den Fahrschalter 17 und die Sicherung 19 die Aüsgangsspannung des Bordnetzes über den Verbindungspunkt 43 zugeführt. Die Ausgänge der Wandler 21a, 21b, 21c führen über als Dioden D1, D2, D3 ausgelegte Schaltelemente zu den Regelelektronikkreisen 23, 27, 31, von denen nur einer dargestellt ist. Parallel zum ersten Regelkreis 23 ist die Hilfsbatterie 25 geschaltet. In der Zuleitung zum ersten Regelkreis 23 liegt die Sicherung 35.

Figur 2 zeigt außerdem ein NAND-Glied 45 einer Signalauswertungsschaltung. Die Spannungsversorgung des NAND-Glieds 45 erfolgt vom Verbindungspunkt 43 aus, von dem eine Leitung über einen Widerstand R1 zum Anschluß 49 des NAND-Glieds 45 führt, welches an Masse liegt. Zwischen dem Anschluß 49 und Masse liegt parallel zum NAND-Glied 45 eine mit Zenerdiode ZD zur Spannungsstabilisierung bzw. Ableitung von Überspannungen.

Von den Ausgänsen der DC/DC-Wandler 21a, 21b, 21c führen drei Verbindungsleitungen zu den Eingängen des NAND-Glieds 45.

Gestrichelt dargestellt sind zusätzliche Verbindungen, nämlich eine Leitung von dem Verbindungspunkt 51 eines aus R2 und R3 bestehenden Spannungsteilers, der zwischen der Leitung 47 und Masse liegt sowie eine Leitung vom ersten Regelelektronikkreis 23 zum Anschluß 49 des NAND-Glieds 45. Zur Trennung der von der Leitung 47 bzw. R1 und von dem ersten Regelelektronikkreis 23 in den Anschluß 49 fließenden Ströme sind zwei Dioden D4 und D5 vorgesehen, deren Kathoden am Anschluß 49 liegen.

Eine Signalleitung 53 führt über einen Begrenzungswiderstand R4 zu einer Leuchtdiode D6. Der Widerstand R4 kann in die Leuchtdiode D6 integriert werden.

Die Funktion der Spannungsversorgung wird anhand der Figuren näher erläutert :

Bei dem Ausführungsbeispiel gemäß Figur 1 wird eine Gruppe von sicherheitsrelevanten Regelelektronikkreisen 23, 27, 31 über einen DC/DC-Wandler 21 mit Spannung versorgt. An dem Eingang des Wandlers liegt bei eingeschaltetem Fahrschalter 17 eine Spannung von 24-30 V an ; für die Regelelektronikkreise wird eine Spannung von ca. 12 bis 14 V bereitgestellt. Die Regelelektronikkreise sind Teil einer elektronischen Bremskreissteuerung, wobei im vorliegenden Beispiel eine Zuordnung zur Vorderachse und Hinterachse der Zugmaschine sowie zu einer Achse des Anhängers vorgesehen ist. Denkbar ist auch eine Zuordnung in Form einer Diagonalbremsanlage.

Durch die am Ausgang des DC/DC-Wandlers 21 liegende Spannung werden die parallel zu den Regelektronikkreisen 23, 21, 31 liegenden als Spannungsspeicher dienenden Hilfsbatterien 25, 29, 33 geladen.

Wenn während des Fahrbetriebs die Bordnetzspannung insgesamt ausfällt, die Zuleitung zu dem DC/DC-Wandler 21 unterbrochen wird oder der Wandler 21 ausfällt, so bleibt das Bremssystem noch so lange funktionsfähig, wie die Hilfsbatterien 25, 29, 33 die Spannungsversorgung der Regelelektronikkreise übernehmen. Die Hilfsbatterien können beispielsweise so ausgelegt sein, daß genügend Energie für die Regelung zweier Vollbremsungen gespeichert ist.

Es ist grundsätzlich auch möglich jeweils eine, auf die Bordnetzspannung abgestimmte Hilfsbatterie zwischen dem Eingang der Regelelektronikkreise 23, 21, 31 und Masse vorzusehen.

Bei einem anderen Ausführungsbeispiel ist der DC/DC-Wandler 21 mit zwei Ausgängen versehen, die mit den Regelelektronikkreisen 23, 21 der Vorder- bzw. Hinterachse der Zugmaschine verbunden sind. Der dritte Regelelektronikkreis 31 der Anhängerachse wird hier über einen Vorwiderstand RV mit dem Bordnetz verbunden, wobei der Widerstandswert so gewählt wird, daß die Spannung am Eingang des dritten Regelelektronikkreises 31 auf 12 bis 14 V gesunken ist.

Der Regelelektronikkreis 31 des Anhängers wird vorzugsweise mittels geeigneter Steckverbindungen mit den Schaltelementen der Zugmaschine verbunden.

Bei dem Ausführungsbeispiel nach Figur 2 werden zusätzliche Sicherheitsreserven dadurch geschaffen, daß die Versorgung der drei Regelelektronikkreise des Bremssystems über drei separate, entkoppelte DC/DC-Wandler 21a, 21b, 21c erfolgt und außerdem eine Anzeigevorrichtung vorgesehen ist, die auf den Ausfall eines der Wandler anspricht.

Dazu werden die Ausgänge aller DC/DC-Wandler 21a, 21b, 21c mit den Eingängen des NAND-Glieds 45 verbunden, das einerseits über die Leitung 47 und den Widerstand R1 mit dem Bordnetz und andererseits mit Masse, also der Leitung 15 des Bordnetzes verbunden ist.

Solange an allen Eingängen des NAND-Glieds 45 eine Spannung anliegt, bleibt die mit der Signalleitung 53 des NAND-Glieds 45 verbundene Leuchtdiode D6 stromlos und dunkel. Bei Ausfall von mindestens einem DC/DC-Wandler liegt an der Signalleitung 53 Spannung. Die Leuchtdiode D6, die beispielsweise am Armaturenbrett des Fahrzeugs angeordnet ist, zeigt den Ausfall an.

Die Anzeigevorrichtung kann auch so beschaltet werden, daß ein Ausfall der Spannungsversorgung der DC/DC-Wandler angezeigt wird. Dies kann dadurch geschehen, daß die Verbindung zum Bordnetz gestört ist oder das Bordnetz ausfällt.

Um diese Schaltfunktion erfüllen zu können, wird das NAND-Glied 45 mit einem der Regelelektronikkreise 23, 27, 31 verbunden. In Figur 2 ist eine Verbindung zum ersten Regelelektronikkreis 23 gestrichelt eingezeichnet. Es kann wahlweise auch eine Verbindung zum zweiten Regelelektronikkreis 27 vorgesehen sein. Über diese Verbindung erfolgt bei Ausfall des Bordnetzes die Spannungsversorgung des NAND-Glieds 45. Statt der eingezeichneten Verbindung kann auch eine Leitung von einer der Hilfsbatterien 25, 29, 33 zu dem Anschluß 49 des NAND-Glieds 45 vorgesehen werden.

Die Dioden D4 und D5 dienen zur Entkopplung der beiden Versorsungswege, die am Anschluß 49 liegen.

Ein zusätzlicher Eingang des NAND-Glieds 45 ist mit dem zwischen der Leitung 47 und Masse liegenden Spannungsteiler aus R2 und R3 verbunden, nämlich an der zwischen den Widerständen liegenden Verbindungsstelle 51 angeschlossen. Solange das Bordnetz und alle DC/DC-Wandler intakt sind, bleibt die Signalleitung 53 stromlos und die zur optischen Anzeige dienende Leuchtdiode D6 dunkel

Bei Ausfall eines der Wandler oder des Bordnetzes leuchtet die Diode D6 auf, wobei die dazu erforderliche Energie bei Ausfall des Bordnetzes von einem der Regelelektronikkreise bzw. der zugehörigen Hilfsbatterie geliefert wird.

Bei entsprechender Auslegung der Anzahl der DC/DC-Wandler und des NAND-Glieds können auch noch mehr Regelelektronikkreise angeschlossen werden, die zusätzlichen Achsen der Zugmaschine und/oder des Anhängers zugeordnet werden können. Auch hier kann eine Diagonalzuordnung nach Art einer Diagonalbremsanlage erfolgen. Auch können zwei und mehr Achsen von einem einzigen entsprechend ausgelegten Regelelektronikkreis versorgt werden.

Die Spannungsversorgung wurde anhand von DC/DC-Wandlern beschrieben. Diese können als Linearregler mit integrierter Strombegrenzung oder vorteilhaft – aufgrund des höheren Wirkungsgrades – als Schaltnetzteile ausgebildet werden. Je nach erforderlicher Eingangsleistung für die Regelelektronikkreise sind diese beispielsweise nach dem Prinzip des Sperr-, Durchfluß- oder Gegentaktwandlers darstellbar. Sofern mehrere Schaltnetzteile wie in Figur 2 vorgesehen werden, werden diese vorzugsweise gemeinsam mit der Signalauswertevorrichtung zu einer in Figur 2 strichpunktiert dargestellten Einheit zusammengefaßt.

## Ansprüche

1. Spannungsversorgung für elektronische Geräte, insbesondere für sicherheitsrelevante Geräte in Kraftfahrzeugen, bei der Gruppen von Geräten oder jedem einzelnen Gerät eine separate Versorgungsschaltung zugeordnet ist, dadurch gekennzeichnet, daß Gruppen von Versorgungsschaltungen (21a, 21b, 21c) oder jeder Versorgungsschaltung (21) mindestens eine unabhängige Hilfsspannungsquelle (25, 29, 33) zugeordnet ist, die bei einer Störung der Versorgungsschaltung (21 ; 21a, 21b, 21c) die Stromversorgung des zugehörigen elektrischen Geräts (23, 27, 31) aufrechterhält, wobei wenigstens eine Anzeigevorrichtung vorgesehen ist, die eine Störung wenigstens einer Versorgungsschaltung (21, 21a, 21b, 21c) anzeigt.

2. Spannungsversorgung nach Anspruch 1, dadurch gekennzeichnet, daß die Versorgungsschaltung einen DC/DC-Wandler (21 ; 21a, 21b, 21c) aufweist.

3. Spannungsversorgung nach Anspruch 1, dadurch gekennzeichnet, daß die Versorgungsschaltung (21 ; 21a, 21b, 21c) als Linearregler, Sperr-, Durchfluß- oder Gegentaktwandler-Schaltretzteil ausgelegt ist.

4. Spannungsversorgung nach einem der vorhergehenden Ansprüche, dadurch gekennzeichnet, daß die Spannung der Hilfsspannungsquelle (25, 29, 33) etwa der Spannung der Bordnetz-Spannungsversorgung entspricht

5. Spannungsversorgung nach einem der Ansprüche 1 bis 3, dadurch gekennzeichnet, daß die Spannung der Hilfsspannungsquelle (25, 29, 33) der Versorgungsspannung des zugeordneten elektronischen Geräts (23, 27, 31) entspricht.

6. Spannungsversorgung nach einem der vorhergehenden Ansprüche, dadurch gekennzeichnet, daß die Hilfsspannungsquelle (25, 29, 33) von der Versorgungsschaltung geladen wird.

7. Spannungsversorgung nach einem der Ansprüche 1 bis 6, gekennzeichnet durch ein zwischen der Versorgungsschaltung (21 ; 21a, 21b, 21c) und der Hilfsspannungsquelle (25, 29, 33) vorgesehenes Schaltelement (D1, D2, D3), das eine Entladung der Hilfsspannungsquelle verhindert.

8. Spannungsversorgung nach Anspruch 7, dadurch gekennzeichnet, daß das Schaltelement eine Diode (D1, D2, D3) aufweist.

9. Spannungsversorgung nach einem der vorhergehenden Ansprüche, dadurch gekennzeichnet, daß die Anzeigevorrichtung eine optische Anzeige und /oder bei mehreren Versorgungsschaltungen eine Signalauswertungseinrichtung (45) aufweist.

10. Spannungsversorgung nach Anspruch 9, dadurch gekennzeichnet, daß die Signalauswertungseinrichtung ein NAND-Glied (45) aufweist.

## Claims

1. Power supply for electronic devices, in particular for safety-related devices in motor vehicles, in which a separate supply circuit is associated with groups of devices or with each individual device, characterised in that at least one independent auxiliary voltage source (25, 29, 33) is associated with groups of supply circuits (21a, 21b, 21c) or with each supply circuit (21), said auxiliary voltage source maintaining the power supply of the associated electrical device (23, 27, 31) in the event of a fault in the supply circuit (21 ; 21a, 21b, 21c), at least one display device being provided which indicates a fault at least of one supply circuit (21, 21a, 21c).

2. Power supply according to Claim 1, characterised in that the supply circuit has a DC/DC converter (21 ; 21a, 21b, 21c).

3. Power supply according to Claim 1, characterised in that the supply circuit (21 ; 21a, 21b, 21c) is designed as a linear controller, blocking, forward or push-pull converter switched-mode power supply.

4. Power supply according to one of the preceding claims, characterised in that the voltage of the auxiliary voltage source (25, 29, 33) corresponds approximately to the voltage of the vehicle power supply.

5. Power supply according to one of Claims 1 to 3, characterised in that the voltage of the auxiliary voltage source (25, 29, 33) corresponds to the supply voltage of the associated electronic device (23, 27, 31).

6. Power supply according to one of the preceding claims, characterised in that the auxiliary voltage source (25, 29, 33) is charged by the supply circuit.

7. Power supply according to one of Claims 1 to 6, characterised by a switching element (D1, D2, D3) provided between the supply circuit (21 ; 21a, 21b, 21c) and the auxiliary voltage source (25, 29, 33) which prevents a discharge of the auxiliary voltage source.

8. Power supply according to Claim 7, characterised in that the switching element has a diode (D1, D2, D3).

9. Power supply according to one of the preceding claims, characterised in that the display device has a visual display and/or in the case of a plurality of supply circuits a signal evaluation device (45).

10. Power supply according to Claim 9, characterised in that the signal evaluation device has a NAND element (45).

## Revendications

1. Alimentation en tension pour des appareils électroniques, notamment pour des appareils électroniques importants pour la sécurité dans les véhicules automobiles, alimentation dans laquelle un circuit d'alimentation distinct est associé aux groupes d'appareils ou bien à chaque appareil individuel, alimentation en tension caractérisée en ce que, aux groupes de circuits d'alimentation (21a, 21b, 21c) ou bien à chaque circuit d'alimentation (21), est associée au moins une source de tension auxiliaire indépendante (25, 29, 33) qui, lors d'une perturbation du circuit d'alimentation (21, 21a, 21b, 21c) maintient l'alimentation en courant de l'appareil électrique correspondant (23, 27, 31), tandis qu'il est prévu au moins un dispositif d'affichage qui indique une perturbation d'au moins un circuit d'alimentation (21, 21a, 21b, 21c).

2. Alimentation en tension selon la revendication 1, caractérisée en ce que le circuit d'alimentation comporte un convertisseur courant continu/courant continu (21 ; 21a, 21b, 21c).

3. Alimentation en tension selon la revendication 1, caractérisée en ce que le circuit d'alimentation (21 ; 21a, 21b, 21c) est réalisé sous la forme d'un régulateur linéaire, d'une partie de réseau de commutation de convertisseur à blocage, à passage ou bien symétrique.

4. Alimentation en tension selon une des précédentes revendications, caractérisée en ce que la tension de la source de tension auxiliaire (25, 29, 33) correspond à peu près à la tension de l'alimentation en tension du réseau de bord.

5. Alimentation en tension selon une des revendications 1 à 3, caractérisée en ce que la tension de la source de tension auxiliaire (25, 29, 33) correspond à la tension d'alimentation de l'appareil électronique associé (23, 27, 31).

6. Alimentation en tension selon une des précédentes revendications, caractérisée en ce que la source de tension d'alimentation (25, 29, 33) est chargée par le circuit d'alimentation.

7. Alimentation en tension selon une des revendications 1 à 6, caractérisée en ce qu'il est prévu entre le circuit d'alimentation (21 ; 21a, 21b, 21c) et la source de tension auxiliaire (25, 29, 33) un élément de commutation (D1, D2, D3) qui empêche une décharge de la source de tension auxiliaire.

8. Alimentation en tension selon la revendication 7, caractérisée en ce que l'élément de commutation comporte une diode (D1, D2, D3).

9. Alimentation en tension selon une des précédentes revendications, caractérisée en ce que le dis-

**EP 0 363 356 B1**

positif d'affichage comporte un affichage optique et/ou dans le cas de plusieurs circuits d'alimentation, un dispositif (45) d'exploitation de signaux.

10. Alimentation en tension selon la revendication 9, caractérisée en ce que le dispositif d'exploitation de signaux comporte un organe NON-ET (45).

Figur 1

EP 0 363 356 B1

Figur 2

EP 0 363 356 B1